# EUROPÄISCHE PATENTANMELDUNG

(11) **EP 1 557 589 A2**
(43) Veröffentlichungstag der Anmeldung: **27.07.2005**
(21) Anmeldenummer: 04028776.5
(22) Anmeldetag: 04.12.2004
(51) Int. Cl.: F16H 57/02

(54) **Fördermittelgetriebe mit Rücklaufsperre**

(30) Priorität: 23.01.2004 DE 102004003393
(71) Anmelder: PIV Drives GmbH, 61352 Bad Homburg (DE)
(72) Erfinder: Dr.-Ing. Schönnenbeck, Gert, 61267 Neu-Anspach (DE); Offermann, Marcel, 61350 Bad Homburg v.d. Höhe (DE); Faust, Peter, 35325 Mücke (DE); Janssen, Peter, 61267 Neu-Anspach (DE)
(74) Vertreter: Petersen, Frank, Dipl.-Ing.

(57) **Zusammenfassung**

Die Erfindung betrifft ein Getriebe für Fördermittel, das eine Antriebswelle (1) aufweist, an der ein Antriebsmotor (19) zu befestigen ist, sowie eine Abtriebswelle (11), mit der das Getriebe mit dem Fördermittel verbunden wird. Innerhalb des Getriebes ist wenigstens eine Getriebestufe (6,7,9,10) vorgesehen. Außerdem ist das Getriebe mit einem in einer Rotationsrichtung sperrenden Freilauf (16) versehen. Dabei wird zwischen den Freilauf (16) und den im normalen Betrieb zwischen Antriebs- und Abtriebswelle (1 bzw. 11) drehmomentübertragenden Elementen eine zweite Getriebestufe (13,14,18) vorgesehen, so dass der Freilauf (16) mit einer höheren Drehzahl zu betreiben ist und er in einem Sperrfall nur ein geringes Haltemoment aufzubringen hat.

## Beschreibung

Die Erfindung betrifft ein Getriebe für ein Fördermittel, mit einer Antriebswelle zur Verbindung mit einem Antriebsmotor, einer Abtriebswelle zur Verbindung mit dem Fördermittel, wenigstens einer ersten Getriebestufe zwischen Antriebs- und Abtriebswelle und einem in einer Rotationsrichtung sperrenden Freilauf.

Unter Fördermitteln im Sinne dieser Erfindung sind Förderbänder, Becherwerke, Wasserschnecken, Wasserturbinen usw. zu verstehen, mit denen ein Fördergut nur in eine Richtung transportiert werden soll. Bei einem Stillstand dieses Fördermittels muss dabei sichergestellt werden, dass noch im, am oder auf dem Fördermittel liegendes Fördergut nicht aufgrund der Schwerkraft das Fördermittel entgegen der üblichen Förderrichtung zurückbewegt.

Hierzu ist es bekannt, zum Beispiel an Antrieben von Förderbändern Freiläufe als Rücklaufsperre vorzusehen. Diese verhindern dann, dass eine Antriebswelle für das Förderband entgegen einer vorgegebenen Rotationsrichtung rotieren kann, beispielsweise bei einem Stromausfall eines Antriebsmotors.

Jetzt ist es allerdings so, dass derartige Freiläufe sehr teure Bauelemente sind, die auch mit ihrer Baugröße überproportional im Preis ansteigen.

Wünschenswert wäre unter diesem Aspekt eine Anordnung des Freilaufes auf der Antriebswelle, da diese am schnellsten läuft. Dies ist jedoch aus Gründen der Zugänglichkeit (Wartung, Reparatur) insbesondere bei Kegelstirnradgetrieben nicht möglich.

Es ist daher üblich, in einem zwischen Antriebsmotor und der eigentlichen Bandantriebswelle angeordneten Getriebe den Freilauf nicht auf die Abtriebsachse zu setzen sondern auf eine zwischen Antriebsachse und Abtriebsachse angeordnete Zwischenwelle. Bei solchen Zwischenwellen, die zwischen schnell laufender Antriebswelle und langsam drehender Abtriebswelle angeordnet sind, ist das im Falle eines Stillstandes zu haltende Drehmoment, das umgekehrt proportional zur Drehzahl ist, kleiner als an der Abtriebswelle. Demgemäß kann auch ein kleinerer Freilauf gewählt werden.

Es hat sich allerdings herausgestellt, dass als Getriebe allein aus diesem Grund oft 3- statt 2-stufige Getriebe verwendet werden, damit die Stufe des Getriebezuges, die den Freilauf trägt, besonders schnell, das heißt mit kleinem Drehmoment laufen kann, um so einen preiswerten Freilauf verwenden zu können. Damit hat man aber auch eine zusätzliche Stufe im Leistungsfluss, wodurch in ungewollter Weise Verlustleistung erzeugt wird. Insbesondere muss bei einer derartigen Verlustleistung auch wiederum ein größeres Gehäuse vorgesehen werden, damit die erzeugte Verlustleistung abgeführt werden kann.

Aufgabe der vorliegenden Erfindung ist es demgemäß, ein Getriebe für ein Fördermittel wie oben beschrieben derart weiterzuentwickeln, dass ein kleinerer und damit preiswerterer Freilauf eingesetzt werden kann, ohne dass hierfür der eigentliche Getriebestrang durch das Vorsehen von zusätzlichen Zwischenstufen unnötig verteuert wird.

Diese Aufgabe wird erfindungsgemäß dadurch gelöst, dass zwischen dem Freilauf und den im Betrieb des Getriebes zwischen Antriebs- und Abtriebswelle Drehmoment übertragenden Elementen wenigstens eine zweite Getriebestufe ist, die nur den Freilauf antreibt.

Die Erfindung hat den Vorteil, dass durch die zweite Getriebestufe die Anordnung des Freilaufes nicht beschränkt wird auf Positionen, die durch im Getriebe vorhandene Wellen vorgegeben werden. Vielmehr kann der Freilauf jetzt relativ frei angeordnet werden.

Außerdem besteht beispielsweise auch die Möglichkeit, dass die Übersetzung in einem Getriebe, die bisher dreistufig ausgeführt wurde, um einen Freilauf vorsehen zu können, nun nur noch zweistufig ausgelegt wird, wodurch ein Kostenvorteil zu erreichen ist. Da die zweite Getriebestufe, über die der Freilauf angetrieben wird, lediglich auf eine statische Belastung auszulegen ist, nicht aber auf eine dynamische, kann er sehr einfach und preiswert ausgeführt werden, so dass trotz der vorzusehenden zweiten Getriebestufe ein insgesamt preisgünstigeres Getriebe erzeugt werden kann.

Die zweite Getriebestufe hat vorzugsweise eine Übersetzung von 1:1 oder aber ins Schnelle. Bei einer Übersetzung von 1:1 ist sie dabei vorzugsweise direkt an die Antriebswelle gekoppelt. Aber auch bei einer Übersetzung ins Schnelle kann die zweite Getriebestufe direkt an die Antriebswelle angekoppelt sein.

Diese Ausführungsform haben zum einen den Vorteil, dass auf den Freilauf im Sperrfall ein besonders niedriges Drehmoment wirkt. Er kann somit relativ klein und damit preiswert gewählt werden.

Des weiteren hat insbesondere die Übersetzung ins Schnelle auch den Vorteil, dass durch dieses der Freilauf bereits bei niedrigen Drehzahlen des Getriebes schon in Drehzahlbereiche kommt, in denen die bei ihm vorhandenen federbelasteten Sperrkörper aufgrund von Zentrifugalkräften abheben. Damit schleifen diese Sperrkörper im normalen Betrieb nicht mehr über die Welle, die sie sperren sollen.

Hierdurch wird auch im normalen Betrieb durch den Freilauf weniger Verlustleistung erzeugt und es ist auch nicht mehr notwendig, durch eine Tauchschmierung, die zusätzlich Widerstand erzeugt, für Kühlung des Freilaufes zu sorgen. Eine normale Spritzschmierung ist in diesem Fall ausreichend.

Bei einem besonders bevorzugten Ausführungsfall ist die zweite Getriebestufe als Planetengetriebe ausgebildet. Hierdurch kann eine besonders kompakte Bauform erreicht werden.

Weitere Vorteile und Merkmale der Erfindung ergeben sich aus der nachfolgenden Beschreibung von Ausführungsbeispielen. Dabei zeigt
- Figur 1: die Prinzipskizze eines erfindungsgemäßen Kegelscheibengetriebes;
- Figur 2: die Prinzipskizze eines erfindungsgemäßen Kegelscheibengetriebes mit einem über ein Planetengetriebe angekoppelten Freilauf;
- Figur 3: die Prinzipskizze eines erfindungsgemäßen Stirnradgetriebes;
- Figur 4: die Prinzipskizze eines Kegelscheibengetriebes gemäß dem Stand der Technik.

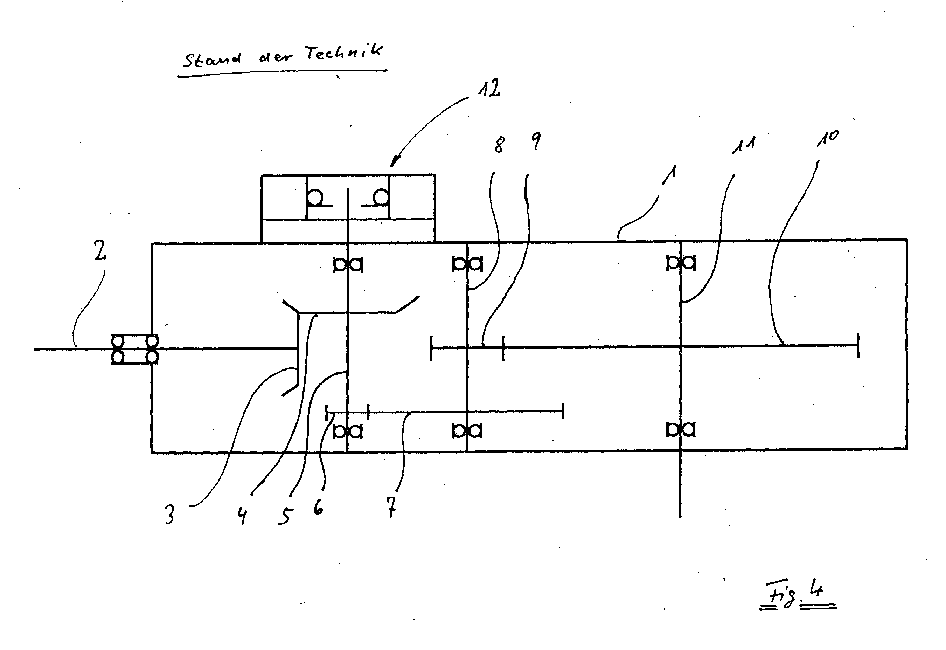

Die Figur 4 zeigt eine Prinzipskizze eines Kegelstirriradgetriebes gemäß dem Stand der Technik. Man erkennt ein Getriebehäuse 1, an dem eine Antriebswelle 2 gelagert ist.

Die Lagerung einer solchen Welle erfolgt in einer dem Fachmann bekannten Weise über Wälzlager. Diese Lagerung, wie auch die Lagerung der noch weiter erwähnten Wellen wird nicht näher erläutert.

Die Antriebswelle ist an dem dem Getriebe abgewandten Ende in üblicher Weise mit einem (nicht dargestellten) Motor zu verbinden.

An dem dem Motor gegenüberliegenden Ende trägt die Antriebswelle 2 ein erstes Kegelrad 3, das mit einem zweiten Kegelrad 4 kämmt, wobei eine Übersetzung ins Langsame erfolgt. Das Kegelrad 4 sitzt fest auf einer ersten Welle 5, auf dem auch ein erstes Ritzel 6 sitzt. Das erste Ritzel 6 kämmt mit einem ersten Zahnrad 7, das auf einer Zwischenwelle 8 sitzt, die auch ein zweites Ritzel 9 trägt. Dieses zweite Ritzel 9 wiederum kämmt mit einem zweiten Zahnrad 10, das auf der Abtriebswelle 11 sitzt. Diese Abtriebswelle ist wiederum aus dem Getriebegehäuse 1 herausgeführt und mit einem (nicht dargestellten) Fördermittel, beispielsweise einem Förderband, einer Förderschnecke oder ähnlichem verbunden. Die bisher beschriebenen Getriebestufen werden im Rahmen der hier vorliegenden Beschreibung als erste Getriebestufen angesehen, über die während des Betriebes Drehmoment übertragen wird vom Antriebsmotor auf die Antriebswelle. Diese Drehmomentübertragung ist dynamisch belastet, so dass auch diese ersten Getriebestufen für die dynamische Belastung ausgelegt sind.

Damit bei einem Ausfall des an die Antriebswelle 2 angeflanschten Motors das noch auf dem genannten Fördermittel befindliche Fördergut nicht aufgrund der Gravitationskraft das Fördermittel in der entgegengesetzten Richtung bewegt, ist an dem hier dargestellten Getriebe ein Freilauf 12 als Rücklaufsperre vorhanden. Dieser sitzt auf der ersten Welle 5 und ermöglicht, dass das Getriebe in einer Rotationsrichtung der ersten Welle 5 freigängig ist, während in der entgegengesetzten Rotationsrichtung der ersten Welle 5 das Getriebe über den Freilauf 12 gesperrt wird.

Der Freilauf 12 ist dabei auf eine Seitenfläche des Getriebegehäuses 1 geflanscht. Dies hat den besonderen Vorteil, dass der Freilauf zu Wartungszwecken gut zugänglich ist. Außerdem hat man so auch die Möglichkeit, den Freilauf umgekehrt einbauen zu können, so dass in einer entgegengesetzten Richtung eine freie Rotation des Getriebes ermöglicht wird, falls das Getriebe in einer anderen Einbausituation zum Einsatz kommt.

Der dargestellte Freilauf 12 ist aufgrund seiner Größe relativ teuer. Diese Größe muss er haben, um auf der ersten Welle 5 montiert werden zu können und um an der Welle 5 anstehende Drehmomente halten zu können.

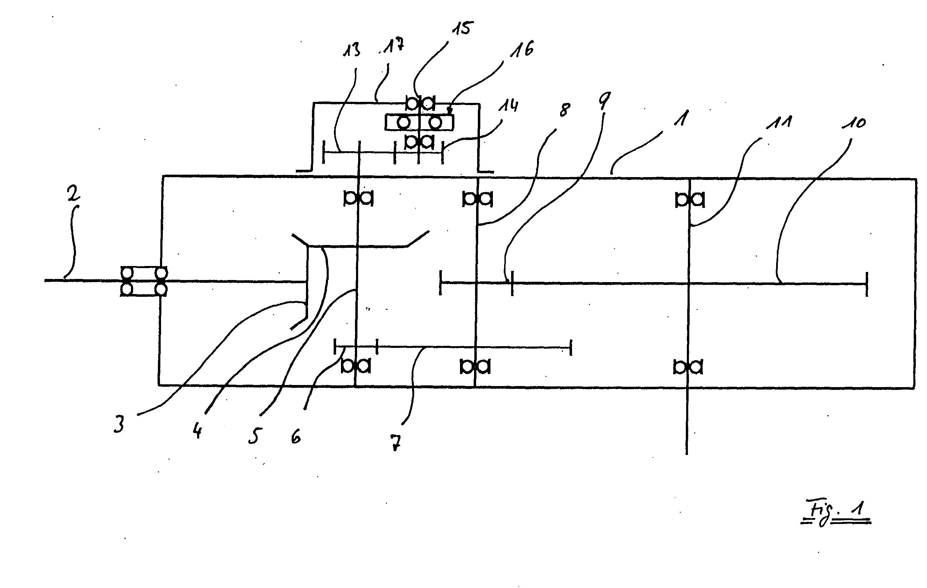

In der Figur 1 ist daher eine erfindungsgemäße Weiterbildung eines Getriebes gemäß dem Stand der Technik gemäß Figur 4 dargestellt. Bei diesem Getriebe sind gleiche Elemente mit gleichen Bezugsziffern bezeichnet.

Im hier dargestellten Beispiel ist an dem aus dem Getriebegehäuse 1 herausgeführten freien Ende der ersten Welle 5 ein Zahnrad 13 montiert, das zusammen mit einem Ritzel 14 eine zweite Getriebestufe bildet, die ins Schnelle übersetzt. Dabei sitzt das Ritzel 14 auf einer Freilaufwelle 15, die mit dem Freilauf 16 zusammenwirkt. Der Freilauf 16 ist dabei über ein Anflanschgehäuse 17 abgestützt, das wiederum am Gehäuse 1 befestigt ist.

Es ist jetzt wesentlich, zu erkennen, dass die durch das Zahnrad 13 und das Ritzel 14 gebildete zweite Getriebestufe ins Schnelle übersetzt, so dass die Freilaufwelle 15 mit einer höheren Drehzahl umläuft als die erste Welle 5 im Getriebe. Dadurch wird auch ein bei einem Stillstand auf die Welle 5 wirkendes Haltedrehmoment beim Hindurchleiten durch diese zweite Getriebestufe zu dem sperrenden Freilauf 16 entsprechend reduziert und der Freilauf 16 kann somit auch kleiner ausgeführt werden, da er im Vergleich zu dem oben beschriebenen Freilauf 12 nur ein kleineres Haltemoment aufbringen können muss.

Dabei ist auch noch zu berücksichtigen, dass über die zweite Getriebestufe 13, 14 und die Freilaufwelle 15 im normalen Betrieb des Getriebes kein Drehmoment übertragen wird sondern lediglich im Fall, dass bei einem Stillstand des Getriebes ein Rücklauf zu verhindern ist. Daher ist es ausreichend, die zweite Getriebestufe 13, 14 und die Freilaufwelle 15 lediglich unter statischen Gesichtspunkten auszulegen. Dies ist konstruktiv recht preiswert zu lösen.

Des weiteren wird durch die höhere Drehzahl der Freilaufwelle 15 auch erreicht, dass die Sperrkörper innerhalb des Freilaufes 16 im Betrieb des Getriebes relativ hohen Drehzahlen ausgesetzt sind, so dass sie aufgrund der dabei wirkenden Fliehkräfte abheben. Damit ist der Freilauf 16 aufgrund des damit wegfallenden Schleifens der Sperrkörper auf der Freilaufwelle 15 sowohl materialschonender als auch verlustärmer zu betreiben. Es ist damit auch ausreichend, den Freilauf 16 lediglich durch eine Spritzschmierung mit Öl zu versehen, während bei einer Ausführungsform im Stand der Technik der Freilauf 12 zur Verschleißminderung und Wärmeabfuhr in einem Ölbad zu betreiben war, was weitere Verlustleistungen bewirkte.

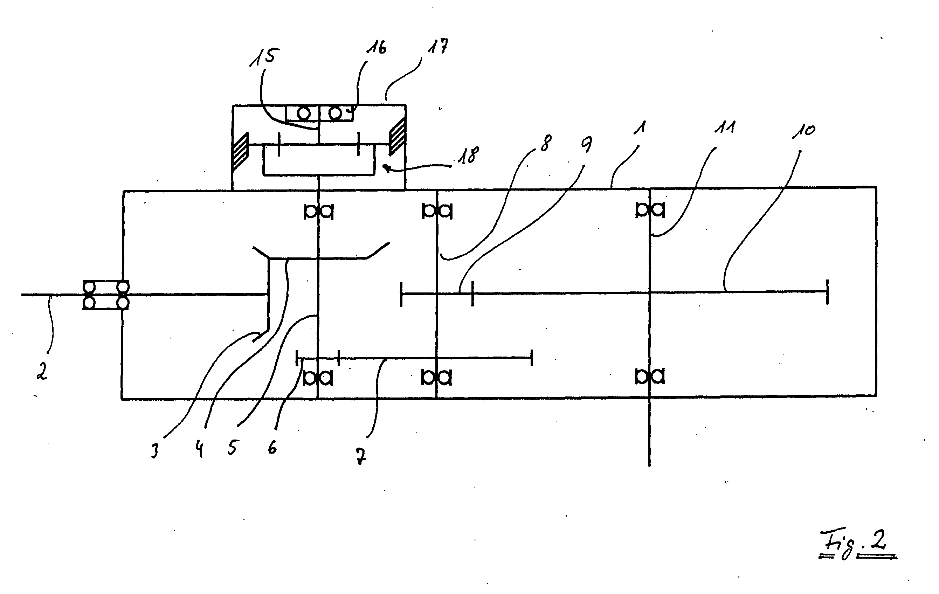

In der Figur 2 ist eine alternative Ausführungsform für die Anbringung eines Freilaufes dargestellt. Auch hier sind wieder gleiche Elemente mit gleichen Bezugsziffern versehen. Man erkennt, dass in dem vorhandenen Anflanschgehäuse 17 der Freilauf 16 über ein Planetengetriebe 18 mit der ersten Welle 5 im Getriebe verbunden ist. Über eine entsprechende Übersetzung zwischen Planeten- und Sonnenrädern kann damit eine entsprechende Übersetzung ins Schnelle für die Freilaufwelle 15 erreicht werden, so dass auch in diesem Fall die Freilaufwelle 15 eine höhere Drehzahl hat als die erste Welle 5 im Getriebe. Damit ist auch hier wiederum der Freilauf 16 mit einer höheren Drehzahl zu betreiben, die bei einem Stillstand des Getriebes mit einem niedrigeren Haltedrehmoment einhergeht.

Auch hat in dem hier dargestellten Beispiel der Freilauf wieder die Eigenschaft, dass im normalen Getriebebetrieb die Sperrkörper von der Freilaufwelle abheben und somit ein niedrigerer Verschleiß und niedrigere Verlustleistungen auftreten.

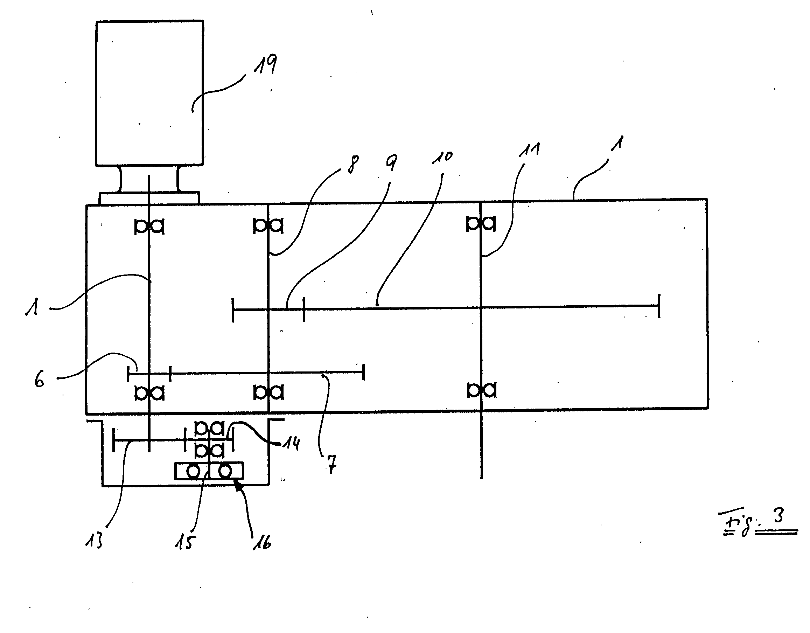

In der Figur 3 ist eine weitere alternative Ausführungsform eines erfindungsgemäßen Getriebes dargestellt. Auch hier sind gleiche Elemente mit gleichen Bezugszeichen beziffert. In diesem Beispiel handelt es sich allerdings um ein reines Stirnradgetriebe, bei dem die Antriebswelle 1 der ersten Welle 5 in den Ausführungsbeispielen gemäß den Figuren 1 und 2 entspricht. In diesem Beispiel trägt also die Antriebswelle 2 direkt das erste Ritzel 6, das mit dem ersten Zahnrad 7 auf der Zwischenwelle 8 kämmt, die wiederum das zweite Ritzel 9 trägt, über die das Drehmoment im Getriebe dann auf das zweite Zahnrad 10 und damit die Abtriebswelle 11 übertragen wird.

Im hier dargestellten Beispiel ist die Antriebswelle 2 an dem dem mit dem (hier dargestellten) Motor 19 verbundenen Ende gegenüberliegenden Ende mit einem Zahnrad 13 versehen, das zusammen mit einem Ritzel 14 die Freilaufwelle 15 in eine Rotation mit erhöhter Drehzahl versetzt, so dass der Freilauf 16 wiederum kleiner gewählt werden kann, als im Beispiel gemäß Figur 4 nach dem Stand der Technik da, da er mit einer höheren Drehzahl umläuft.

Auch in diesem Beispiel wird während des üblichen Betriebes des Getriebes über die durch das Zahnrad 13 und das Ritzel 14 gebildete Getriebestufe kein Drehmoment übertragen. Erst bei einem Ausfall oder Abschalten des Motors 19 wird über diese zweite Getriebestufe ein statisches Haltemoment übertragen. Man erkennt hier insbesondere, dass diese zweite Getriebestufe mit der Antriebswelle verbunden ist, ohne dass hier noch andere Elemente zwischengeschaltet wären, die im Betrieb des Getriebes zwischen Antriebswelle und Abtriebswelle Drehmoment übertragen. Derartige Elemente sind bei den in den Figuren 1 und 2 dargestellten Getrieben durch den Kegelradsatz 3, 4 gebildet.

Der Wegfall von zwischen Antriebswelle und zweiter Getriebestufe zu findenden Elementen hat den besonderen Vorteil, dass die Eintrittsdrehzahl für die aus Zahnrad 13 und Ritzel 14 gebildete zweite Getriebestufe schon sehr hoch angesetzt ist, so dass die gewünschte hohe Drehzahl mit gleichzeitig niedrigem statischen Haltemoment für den Freilauf 16 besonders einfach zu erreichen ist.

## Patentansprüche

1. Getriebe für ein Fördermittel, mit einer Antriebswelle (1) zur Verbindung mit einem Antriebsmotor (19), einer Abtriebswelle (11 ) zur Verbindung mit dem Fördermittel, wenigstens einer ersten Getriebestufe (6, 7; 9, 10) zwischen Antriebswelle (1) und Abtriebswelle (11) und einem in einer Rotationsrichtung sperrenden Freilauf (12, 16),
**dadurch gekennzeichnet,**
**dass** zwischen dem Freilauf (16) und dem im Betrieb zwischen Antriebswelle (2) und Abtriebswelle (11) Drehmoment übertragenden Elementen wenigstens eine zweite Getriebestufe (13, 14; 18) ist, die nur den Freilauf antreibt.

2. Getriebe gemäß Anspruch 1,
**dadurch gekennzeichnet,**
**dass** die zweite Getriebestufe (13, 14; 18) eine Übersetzung von 1:1 oder ins Schnelle aufweist.

3. Getriebe gemäß Anspruch 1,
**dadurch gekennzeichnet,**
**dass** die zweite Getriebestufe ein Planetengetriebe (18) ist.

4. Getriebe gemäß Anspruch 1,
**dadurch gekennzeichnet,**
**dass** die zweite Getriebestufe (13, 14; 18) ohne im Betrieb zwischen Antriebswelle (2) und Abtriebswelle (11) Drehmoment übertragende Elemente mit der Antriebswelle (2) verbunden ist.
